# EUROPEAN PATENT APPLICATION

(11) **EP 3 059 675 A1**
(43) Date of publication of application: **24.08.2016**
(21) Application number: 16155679.0
(22) Date of filing: 15.02.2016
(51) Int. Cl.: G06F 9/46

(54) **METHOD AND APPARATUS FOR MANAGING MODULE USE OF MULTI-USER BASED DEVICE**

(30) Priority: 17.02.2015 KR 20150024487
(71) Applicant: Samsung Electronics Co., Ltd., Gyeonggi-do 16677 (KR)
(72) Inventor: HEO, Youn Kyu, 18359 Gyeonggi-do (KR); JANG, Dong Ho, 18325 Gyeonggi-do (KR)
(74) Representative: Birchenough, Lewis

(57) **Abstract**

Methods and apparatuses are provided for managing use of a module of an electronic device. An operating system (OS) is executed in a first state in which a first application program is capable of using a hardware component or a software module. A second application program is permitted to use the hardware component or the software module in the first state in response to a first input requesting execution of a function of the second application program, which is set to be executed in a second state of the OS. A third application program is prevented from using the hardware component or the software module in the first state in response to a second input requesting execution of a function of the third application program, which is set to be executed in a third state of the OS.

## Description

### PRIORITY

This application claims priority to Korean Patent Application No. 10-2015-0024487 filed in the Korean Intellectual Property Office on February 17, 2015, the entire disclosure of which is incorporated herein by reference.

### BACKGROUND

### 1. Field of the Disclosure

The present disclosure relates generally to a multi-user based electronic device, and more particularly, to an electronic device and a method that determine whether to assign an access right to a module when access to the module is requested from an executed application.

### 2. Description of the Related Art

In coordination with developments in information and communication technology, network devices such as, for example, base stations and the like, have been installed throughout the country. An electronic device receives data from and transmits data to another electronic device through a network, and thus, a user is able to freely utilize the network from anywhere in the country.

Various types of electronic devices provide a variety of functions in accordance with the recent trend of the digital convergence. For example, a smart phone supports a call function as well as an Internet connection through the network. Furthermore, a smart phone is also capable of supporting music or video playback, and video and photo capturing using an image sensor.

Additionally, an electronic device constructs an environment for multiple users. For example, a parent of a child creates accounts for the parent and for the child in the electronic device for use of the electronic device in different environments.

### SUMMARY

The present disclosure has been made to address at least the above problems and/or disadvantages and to provide at least the advantages described below. Accordingly, an aspect of the present disclosure provides a multi-user based electronic device and a method thereof.

In accordance with an aspect of the present disclosure, an electronic device is provided that includes a display, a processor electrically connected to the display, and a hardware component electrically connected to the processor. The electronic device also includes a memory electrically connected to the processor and configured to store an operating system (OS), a software module, a first application program, a second application program, a third application program, and instructions. Upon execution of the instructions, the processor is configured to execute the OS in a first state in which the first application program is capable of using at least one of the hardware component and the software module. The processor is also configured to permit the second application program to use the at least one of the hardware component and the software module in the first state in response to a first input requesting execution of a function of the second application program, which is set to be executed in a second state of the OS, the second state being different from the first state. The processor is further configured to prevent the third application program from using the at least one of the hardware component and the software module in the first state in response to a second input requesting execution of a function of the third application program, which is set to be executed in a third state, the third state being different from both the first state and the second state.

In accordance with another aspect of the present disclosure, a method is provided that is performed on an electronic device. An OS is executed in a first state in which a first application program is capable of using at least one of a hardware component and a software module. A second application program is permitted to use the at least one of the hardware component and the software module in the first state in response to a first input requesting execution of a function of the second application program, which is set to be executed in a second state of the OS. The second state is different from the first state. A third application program is prevented from using the at least one of the hardware component and the software module in the first state in response to a second input requesting execution of a function of the third application program, which is set to be executed in a third state of the OS. The third state is different from the both the first state and the second state.

In accordance with still another aspect of the present disclosure, a computer recording medium recorded with a computer-readable instruction is provided. The instruction, which is executed by at least one processor, causes the processor to perform a method in which an OS is executed in a first state in which a first application program uses at least one of a hardware component and a software module. A second application program is permitted to use the at least one of the hardware component and the software module in the first state in response to a first input requesting execution of a function of the second application program, which is set to be executed in a second state of the OS. The second state is different from the first state. A third application program is prevented from using the at least one of the hardware component and the at least one software module in the first state in response to a second input requesting execution of a function of the third application program, which is set to be executed in a third state. The third state is different from both the first state and the second state.

In accordance with a further aspect of the present disclosure, a method is provided for managing access to a module of an electronic device. A request to access the module is received from a user or an application executed by the user. It is determined whether an identifier (ID) of the user matches a main user ID of the electronic device. Access to the module is permitted, when the ID of the user matches the main user ID. It is determined whether to permit access to the module based on at least one of an access policy and user information, when the ID does not match the main user ID.

### BRIEF DESCRIPTION OF THE DRAWINGS

The above and other aspects, features, and advantages of embodiments of the present disclosure will be more apparent from the following detailed description when taken in conjunction with the accompanying drawings, in which:
FIG. 1 is a block diagram illustrating an electronic device in a network environment, according to an embodiment of the present disclosure;
FIG. 2 is a block diagram illustrating a multi-user based electronic device, according to an embodiment of the present disclosure;
FIG. 3A is a diagram illustrating application icons displayed on a screen of an electronic device, according to an embodiment of the present disclosure;
FIG. 3B is a diagram illustrating application icons displayed on a screen of an electronic device, according to another embodiment of the present disclosure;
FIG. 3C is a diagram illustrating application icons displayed on a screen of an electronic device, according to another embodiment of the present disclosure;
FIG. 4 is a flow chart illustrating a method for assigning an access right for any module of an electronic device to an application executed on the electronic device, according to an embodiment of the present disclosure;
FIG. 5 is a flow chart illustrating a method for determining whether to assign an access right for any module of an electronic device to an application executed on the electronic device, according to an embodiment of the present disclosure;
FIG. 6 is a flow chart illustrating a method for executing an application in response to an access request to the application received from an electronic device, according to an embodiment of the present disclosure;
FIG. 7 is a diagram illustrating notification of an application executed on the electronic device that access to a module included in the electronic device is not permitted, according to an embodiment of the present disclosure;
FIG. 8 is a block diagram illustrating an electronic device, according to an embodiment of the present disclosure; and
FIG. 9 is a block diagram of a program module, according to an embodiment of the present disclosure.

### DETAILED DESCRIPTION

Embodiments of the present disclosure are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present disclosure.

As used herein, the expressions "have", "may have", "include", "comprise", "may include", and "may comprise", indicate the existence of corresponding features (e.g., elements such as numeric values, functions, operations, or components), but do not exclude the presence of additional features.

IAs used herein, the expressions "A or B", "at least one of A and B", and "one or more of A and B" may include any and all combinations of one or more of the associated listed items. For example, the term "A or B", "at least one of A and B", or "one or more of A and B" may refer to a case where at least one A is included, a case where at least one B is included, and a case where at least one A and at least one B are included.

Terms such as "first", "second", and the like, as used herein, may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. Additionally, without departing from the scope of the present disclosure, a first element may be referred to as a second element, and similarly, a second element may be referred to as a first element.

As described herein, when an element (e.g., a first element) is referred to as being "(operatively or communicatively) coupled with/to" or "connected to" another element (e.g., a second element), the element can be directly coupled with/to or connected to the other element or an intervening element (e.g., a third element) may be present. In contrast, when an element (e.g., the first element) is referred to as being "directly coupled with/to" or "directly connected to" another element (e.g., the second element), it should be understood that there are no intervening elements (e.g., a third element).

As used herein, the expression "configured to" may be used interchangeably with, for example, the expression "suitable for", "having the capacity to", "designed to", "adapted to", "made to", or "capable of". The term "configured to" does not only mean "specifically designed to" in hardware. Instead, the expression "a device configured to" may mean that the device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) that may perform corresponding operations by executing one or more software programs stored in a memory device.

Terms used herein describe specific embodiments of the present disclosure and are not intended to limit the scope of the present disclosure. The terms of a singular form may include plural forms unless otherwise specified. Unless otherwise defined herein, all terms used herein, which include technical or scientific terms, may have the same meanings as those generally understood by a person skilled in the art. It is further understood that terms, which are defined in a dictionary and are commonly used, should also be interpreted as is customary in the relevant related art and not in an idealized or overly formal manner unless expressly so defined herein in various embodiments of the present disclosure. In some cases, even if terms are defined in the specification, they are not to be interpreted to exclude other embodiments of the present disclosure.

An electronic device, according to various embodiments of the present disclosure, may be embodied as at least one of a smartphone, a tablet personal computer (PC), a mobile phone, a video telephone, an electronic book reader, a desktop PC, a laptop PC, a netbook computer, a workstation, a server, a personal digital assistant (PDA), a portable multimedia player (PMP), a Motion Picture Experts Group (MPEG-1 or MPEG-2) Audio Layer 3 (MP3) player, a mobile medical device, a camera, or a wearable device. According to various embodiments, the wearable device may include at least one of an accessory type (e.g., a watch, a ring, a bracelet, an anklet, a necklace, glasses, a contact lens, or a head-mounted-device (HMD), a fabric or garment-integrated type (e.g., electronic apparel), a body-attached type (e.g., a skin pad or a tattoo), or an implantable type (e.g., an implantable circuit).

According to an embodiment, the electronic device may be embodied as a home appliance. The smart home appliances may include at least one of, for example, a television (TV), a digital versatile disc (DVD) player, an audio player, a refrigerator, an air conditioner, a cleaner, an oven, a microwave oven, a washing machine, an air cleaner, a set-top box, a TV box, a game console, an electronic dictionary, an electronic key, a camcorder, an electronic picture frame, and the like.

According to various embodiments of the present disclosure, the electronic device may be embodied as at least one of a medical device (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), a scanner, and an ultrasonic device) receiving a user input in an idle mode, a navigation device, a global positioning system (GPS) receiver, an event data recorder (EDRs), a flight data recorder (FDRs), a vehicle infotainment device, electronic equipment for vessels (e.g., navigation systems and gyrocompasses), avionics, a security device, a head unit for a vehicle, an industrial or home robot, an automated teller machine (ATM), a point of sales (POS) device, or an Internet of Things (IoT) device (e.g., light bulbs, various sensors, electric or gas meters, sprinkler devices, fire alarms, thermostats, street lamps, toasters, exercise equipment, hot water tanks, heaters, boilers, and the like).

According to an embodiment of the present disclosure, the electronic device may be embodied as at least one of a part of furniture or a building/structure, an electronic board, an electronic signature receiving device, a projector, or various measuring instruments (e.g., a water meter, an electricity meter, a gas meter, a wave meter, and the like). According to various embodiments, the electronic device may be one of the above-described devices or a combination thereof. An electronic device, according to an embodiment, may be a flexible electronic device. Furthermore, an electronic device, according to an embodiment, may not be limited to the above-described electronic devices and may include other electronic devices and new electronic devices according to the development of new technologies.

The term "user", as used herein, may refer to a person who uses an electronic device or may refer to a device (e.g., an artificial intelligence electronic device) that uses an electronic device.

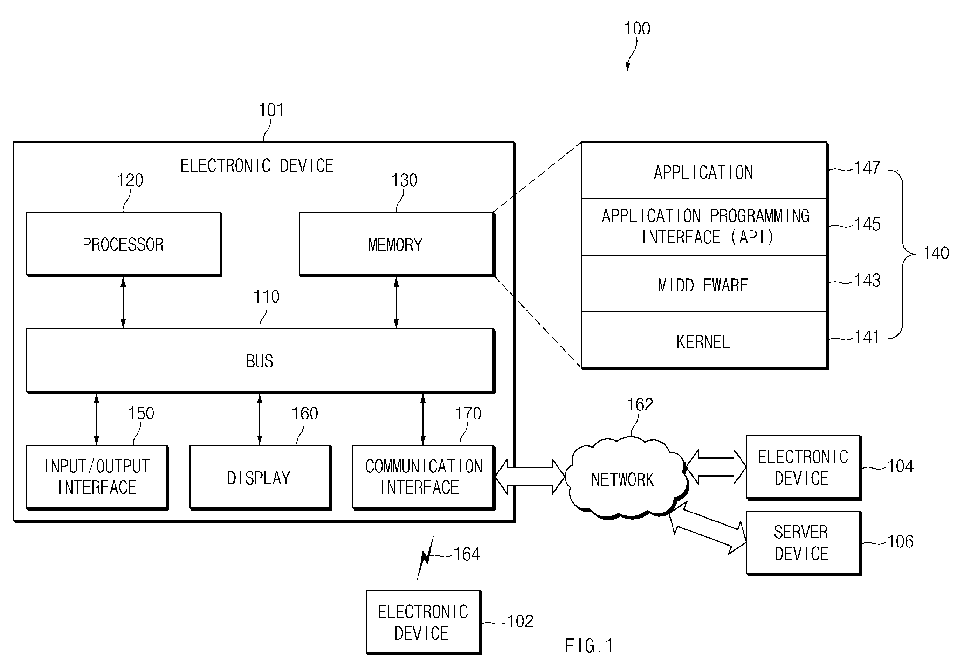

According to an embodiment of the present disclosure, an electronic device is exemplified as a smartphone. FIG. 1 is a block diagram illustrating an electronic device in a network environment, according to an embodiment of the present disclosure.

Referring to FIG 1, an electronic device 101 is shown in a network environment 100. The electronic device 101 includes a bus 110, a processor 120, a memory 130, an input/output interface 150, a display 160, and a communication interface 170. According to an embodiment of the present disclosure, at least one of the above-described components may be omitted or one or more additional components may be included.

The bus 110 interconnects the above-described components 110 to 170 and may be a circuit for conveying communications (e.g., a control message and/or data) among the above-described components.

The processor 120 may include one or more of a CPU, an application processor (AP), or a communication processor (CP). For example, the processor 110 may perform data processing or an operation associated with control and/or communication of at least one other component.

The memory 130 may include a volatile and/or nonvolatile memory. The memory 130 may store instructions or data associated with at least one other component of the electronic device 101. According to an embodiment of the present disclosure, the memory 130 may store software and/or a program 140. The program 140 includes, for example, a kernel 141, a middleware 143, an application programming interface (API) 145, and/or an application program (or an application) 147. At least a portion of the kernel 141, the middleware 143, or the API 145 may be referred to as an "operating system (OS)".

The kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101, so as to control or manage system resources.

The middleware 143 may perform a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the assigned priority, which makes it possible to perform scheduling or load balancing on the one or more task requests.

The API 145 may be an interface through which the application program 147 controls a function provided by the kernel 141 or the middleware 143, and may include, for example, at least one interface or function (e.g., an instruction) for file control, window control, image processing, character control, or the like.

The I/O interface 150 may transmit an instruction or data, input from a user or another external device, to other component(s) of the electronic device 101. Furthermore, the I/O interface 150 may output an instruction or data, received from other component(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., text, an image, a video, an icon, a symbol, and the like) to a user. The display 160 may include a touch screen and may receive, for example, a touch, gesture, proximity, or hovering input using an electronic pen or a portion of a user's body.

The communication interface 170 may establish communication between the electronic device 101 and an external device (e.g., a first external electronic device 102, a second external electronic device 104, or a server device 106). For example, the communication interface 170 may be connected to a network 162, through wireless communication or wired communication, to communicate with the second external electronic device 104 or the server 106.

The wireless communication may include at least one of, for example, long-term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), or the like, as cellular communication protocol. Furthermore, the wireless communication may include, for example, a local area network (LAN) 164. The LAN 164 may include at least one of a wireless fidelity (Wi-Fi), a near field communication (NFC), a global navigation satellite system (GNSS), or the like. The GNSS may include at least one of, for example, a GPS, a global navigation satellite system (Glonass), a Beidou navigation satellite system ("Beidou"), or a European global satellite-based navigation system ("Galileo") based on an available region, a bandwidth, or the like. "GPS" and "GNSS" may be used interchangeably herein. The wire communication may include at least one of, for example, a universal serial bus (USB), a high definition multimedia interface (HDMI), a recommended standard-232 (RS-232), or a plain old telephone service (POTS). The network 162 may include at least one of a telecommunications network, such as, for example, a computer network (e.g., LAN or WAN), an Internet, or a telephone network.

The first external electronic device 102 and the second external electronic device 104 may be a different type of device or the same type of device as that of the electronic device 101. According to an embodiment, the server device 106 may include a group of one or more servers. According to various embodiments, all or a part of the operations that the electronic device 101 will perform may be executed by another or a plurality of electronic devices (e.g., the first external electronic devices 102, the second external electronic device 104, or the server device 106). When the electronic device 101 executes any function or service automatically or in response to a request, the electronic device 101 may not perform the function or the service internally, but, alternatively, it may request at least a portion of a function associated with the electronic device 101 at another device (e.g., the first external electronic device 102, the second external electronic device 104, or the server device 106). The other electronic device 102, 104, or the server device 106 may execute the requested function or an additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

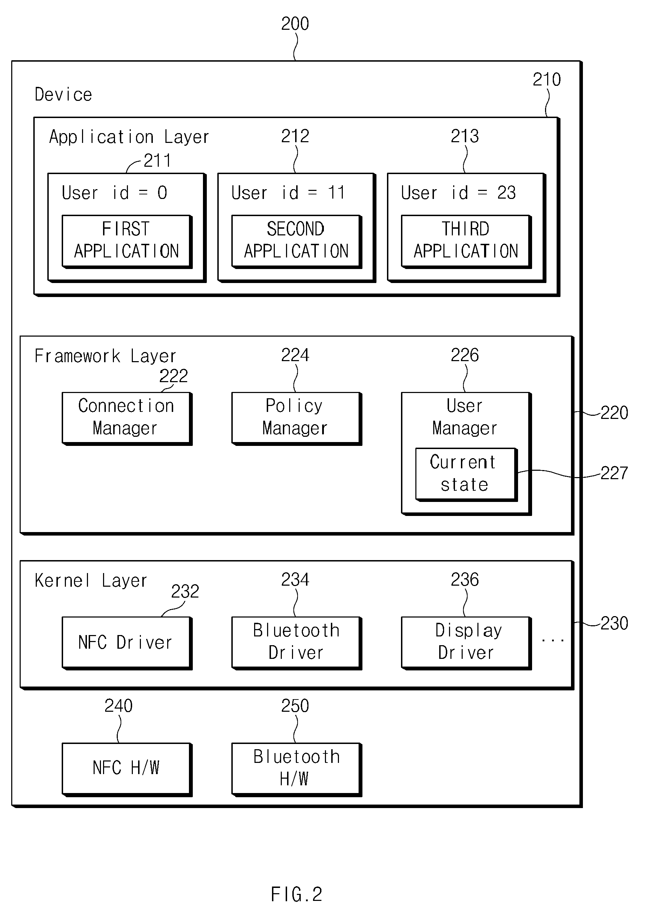

FIG. 2 is a block diagram illustrating a multi-user based electronic device, according to an embodiment of the present disclosure. Referring to FIG. 2, an electronic device 200 includes an application layer 210, a framework layer 220, a kernel layer 230, NFC hardware 240, and Bluetooth hardware 250. The electronic device 200 may further include various hardware components in addition to the NFC hardware 240 and the Bluetooth hardware 250.

The configuration of the electronic device 200 illustrated in FIG. 2 is exemplary, and the configuration may be changed or modified. For example, the electronic device 200 may include a user interface for receiving an instruction or information from a user. In this case, the user interface may be an input device such as a keyboard, a mouse, or the like. However, the user interface may also be a graphic user interface (GUI) displayed on a screen of the electronic device 200.

An OS may be composed of a multiple users including a first user 211, a second user 212, and a third user 213. Furthermore, the OS may assign "user id = 0" to the first user 211, "user id = 11" to the second user 212, and "user id = 23" to the third user 213, as identifiers. The term "user" may refer to an individual execution environment that is set through the OS and is implemented to discriminate execution environments. The term "end user" may refer to a person possessing the electronic device 200.

The end user may create a new user through an application installed on the electronic device 200 or through an environment setting menu, and may input or modify information of a new user or a previous user. For example, the end user may set a specific relationship between a new user and a previously created user (e.g., parent-child). The end user may set whether to use the specific relationship as a managed profile, or may select whether to use the specific relationship as an environment for another end user. Pieces of information of the user may be managed by a user manager 266. Unlike the above description, the electronic device 200 may be managed by an external server, such as mobile device management (MDM). In this case, the manager may create a new user environment (e.g., a new user id) in the electronic device 200. When one electronic device is shared by a plurality of end users, a plurality of OSs may support a multi-user environment to provide execution environments corresponding to end users. However, even though an electronic device uses an operating system, which supports a multi-user environment, an electronic device (e.g., a smartphone or the like), which an end user continues to carry, need not use the multi-user environment. With the recent trend of bring your own device (BYOD), there is an increased need to use private data or applications of an end user and data or applications for company affairs at independent environments. Accordingly, it may be necessary to provide a separate execution environment for one end user. For example, a method in which a separate user id is assigned to each of execution environment for separation or isolation may have been provided.

The application layer 210 may be composed of a first application, a second application, and a third application, which are respectively included in, for example, the first user 211, the second user 212, and the third user 213. For example, the first application may be an application that an end user installs on an execution environment of the first user 211, the second application may be an application that the end user installs on an execution environment of the second user 212, and the third application may be an application that an end user installs on an execution environment of the third user 213. In FIG. 2, one application is installed with respect to each user. However, the scope and spirit of the present disclosure may not be limited thereto, and the number of applications installed for each user may not be limited to this disclosure.

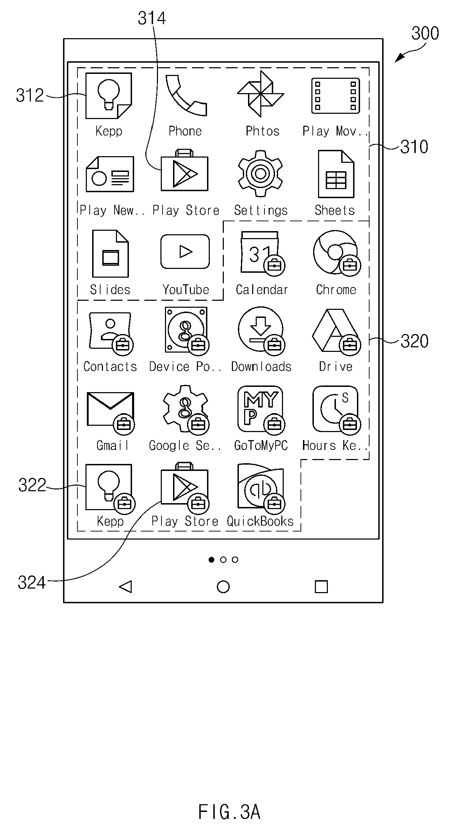

Conventionally, the use environments of electronic devices may differ from each other for each user. For example, when an end user utilizes the electronic device in a log-in fashion using one user, an application icon of another user may not be displayed on a screen, while an application icon of only a user being utilized may be displayed on the screen. According to various embodiments of the present disclosure, even though the first user 211 is a current user of the OS, both application icons of the first user 211 and application icons of the second and third users 212 and 213 may be displayed on a screen. However, application icons of the first to third users 211 to 213 may be marked with identification indicators for distinguishing the first user 211, the second user 212, and the third user 213, as described in greater detail below with respect to FIGS. 3A to 3C.

According to various embodiments of the present disclosure, the first user 211 may be a current user of the OS and may be set at the electronic device 200. The current user of the OS may be a user that the OS sets while being executed. The current user may be changed through user switching based on a request of an end user or the user manager 226, or based on any other request (e.g., an external IT manager).

According to various embodiments of the present disclosure, the first user may access most functions of the electronic device 200. In contrast, at least a part of functions of the electronic device 200 may be restricted with respect to the second user 212 and the third user 213. The electronic device 200 restricts an application that executed in an environment of a user different from the current user of the OS, or a processor so as not to be connected to any module in the electronic device 200. The module may include managers (e.g., a connection manager 222, a policy manager 224, and the user manager 226) of the framework layer 220, drivers (e.g., an NFC driver 232, a Bluetooth driver 234, and a display driver 236) of the kernel layer 230, the NFC hardware 240, the Bluetooth hardware 250, a service, and the like. For example, when the second user 212 is utilized for company affairs, the electronic device 200 may restrict a camera function, a USB function, a file transfer function, and the like. When the third user is utilized for a child, the electronic device 200 may restrict access to a game application or a web page that is not appropriate for the age of the child.

The framework layer 220 includes the connection manager 222, the policy manager 224, and the user manager 226. The framework layer 222 may further include an application manager. The connection manager 222 may assign an access right to one user that requests access to the module. In this case, the connection manager 222 may utilize an access policy and user information. The access policy and the user information may be stored in the policy manager 224 and the user manager 226, respectively. Furthermore, the user manager 226 may store a current state 227. The current state 227 may refer to data including information set to the current user on the OS. An operation of the connection manager 222 is described in greater detail below.

The connection manager 222 may receive an access request about the module from an application executed by the user. The access request may include a user ID as an identifier of the user. In particular, the electronic device 200 may receive, from an end user, an input requesting execution of any one application. In this case, an executed application may request access to a required module from the connection manager 222.

As described above, the electronic device 200 may display application icons about applications of the first to third users 211 to 213 on a screen together. The connection manager 222 may determine whether a user ID of a user including the executed application is a user ID (hereinafter referred to as "current user ID") of a current user, and may determine whether to permit access to the module based on the determination result.

If whether the user ID is the current user ID is only determined upon determination of access to the module, however, applications executed on users different from the current user cannot access any module. According to various embodiments of the present disclosure, even though a user to which an execution-requested application belongs is not a current user, is must be determined whether to permit access to the module. The reason, for example, is that even though a user does not access a camera, the electronic device need not restrict the use of a Bluetooth headset.

The connection manager 222 may determine whether to permit an application, requesting access to the module, to access the module with reference to policy information about each user and each module, which the policy manager 224 retains, and user information about each user, which the user manager 226 retains.

The access policy may include an access right about a user, to which the module belongs, or to the module, which is a user of an application requesting access to the module. When the module corresponds to Bluetooth communication, the access policies of profiles may be set to be the same as or different from each other. The access policy may be received from the outside through a communication circuit.

Furthermore, the user information may include at least one of a security level about the user (e.g., a level capable of accessing any other user or a level unable to access any other user) and the use of the user (e.g., a managed profile). In addition, the user information may include a specific relationship (e.g., parent-child or the like) between a user and a different user. The access policy is exemplified as allowing only specific user information. However, it may be possible to determine whether to permit access, based on the specific user information. For example, when the access policy permits only access of a user utilized as a managed profile, the connection manager 222 may determine user information of a user to which an application requesting an access belongs and may permit access only when the user is utilized as a managed profile.

When a determination is made to permit the executed application to access the module, the connection manager 222 may request a connection to a component (e.g., the module, or a software module or a hardware module connected with the module) corresponding to the module. The software module may refer to each manager of the framework layer 220 and each driver of the kernel layer 230. The hardware module (or component) may refer to the NFC hardware 240, the Bluetooth hardware 250, and the like. For example, when access to the Bluetooth hardware 250 is permitted, the connection manager 222 may request a connection of the executed application to a Bluetooth driver 234.

In FIG. 2, the connection manager 222 is shown as a separate object that operates independently in the framework layer 220. However, according to an embodiment of the present disclosure, the connection manager 222 may perform a role together with an operation of a corresponding manager in each manager belonging to the framework layer 220. For example, when any application accesses any user, the user manager 226 may perform a role of the connection manager 222 together with its own function.

The kernel layer 230 includes the NFC driver 232, the Bluetooth driver 234, and the display driver 236. At least one of the NFC driver 232, the Bluetooth driver 234, or the display driver 236 may receive a connection request from the connection manager 222. A kernel driver receiving the connection request may activate corresponding hardware.

FIGS. 3A to 3C are diagrams illustrating application icons displayed on a screen of an electronic device, according to embodiments of the present disclosure.

Referring to FIG. 3A, a plurality of application icons included in a first application icon group 310 and a second application icon group 320 are displayed on a screen 300. The first application icon group 310 and the second application icon group 320 may be application groups of different users. Referring to the first application icon group 310 and the second application icon group 320, an identification indicator is disposed at the bottom right portion of each application icon in the second application icon group 320. An application that does not have an identification indicator is executed by the first user, and an application that has an identification indicator is executed by the second user. A conventional connection in which a Bluetooth connection is requested through an application executed by selecting an application icon with an identification indicator may be problematic in that the connection fails.

According to various embodiments of the present disclosure, when the same application is executed by different users, application icons of the same application corresponding to the different users are displayed together on the electronic device 200. As shown in FIG. 3A, a first application icon 312 of the first application icon group 310 is the same as a second application icon 322 of the second application icon group 312. In addition, a third application icon 314 of the first application icon group 310 is the same as a fourth application icon 324 of the second application icon group 312.

Application icons of two users are illustrated in FIG. 3A. However, according to various embodiments of the present disclosure, application icons of multiple users may be displayed on the screen 300 of the electronic device 200 over a plurality of pages. Furthermore, the electronic device 200 may display only application icons for a selected user on the screen 300 based on an end user input.

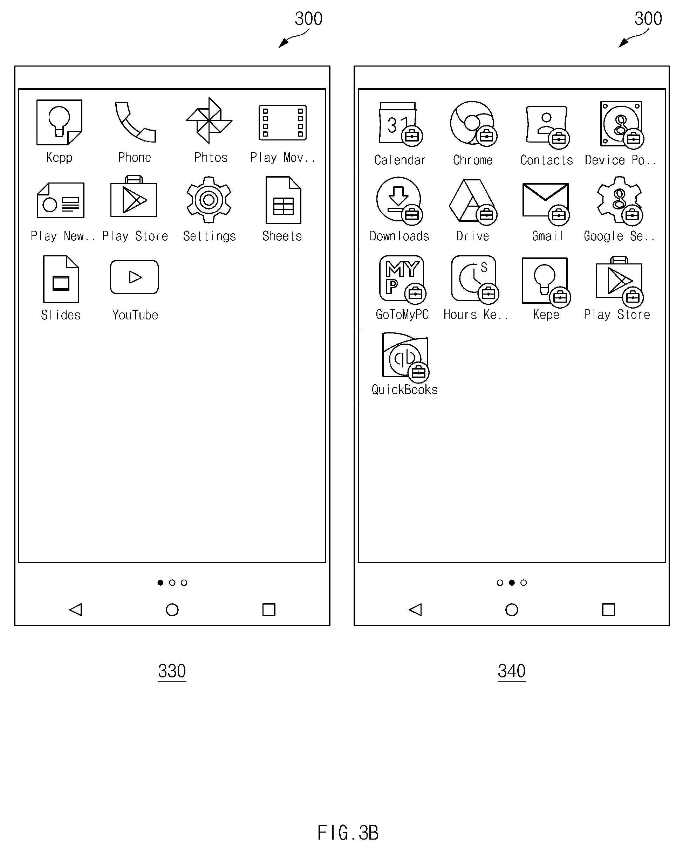

Referring to a screens 330 and 340 of FIG. 3B, the electronic device 200 displays application icons of applications executed by the first user through a first screen, and displays application icons of applications executed by a second user through a second screen, which is displayed through a scroll manipulation.

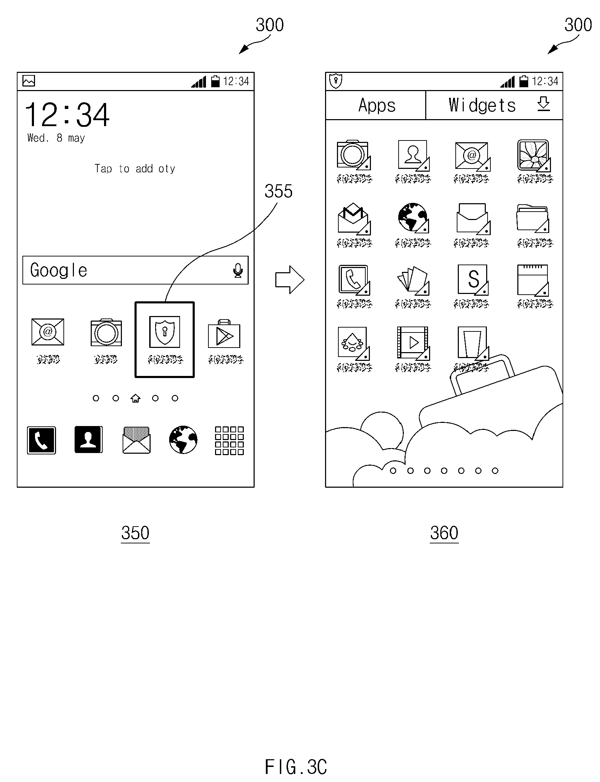

Referring to a screens 350 and 360 of FIG. 3C, the electronic device 200 includes a function to create an icon 355 for selectively displaying application icons of applications of any user. When an input for selecting the icon 355 is received, the electronic device 200 displays application icons of applications executed by a user corresponding to the selected icon.

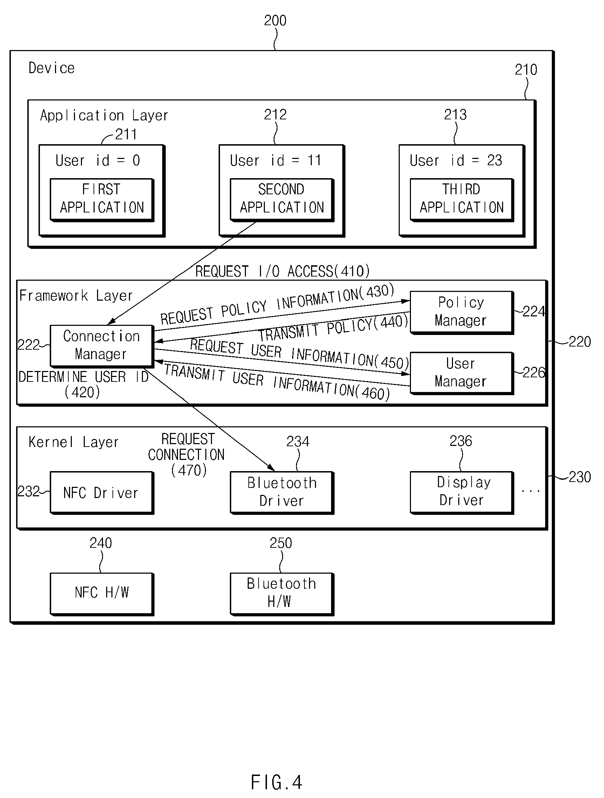

FIG. 4 is a flow chart illustrating a method for assigning an access right for any module of an electronic device to an application executed on the electronic device, according to an embodiment of the present disclosure.

Referring to FIG. 4, in step 410, a second application of the second user 212 requests access to any module included in the electronic device 200, such as, for example, access to the Bluetooth hardware 250 as an I/O device, from the connection manager 222.

In step 420, the connection manager 222 determines a user ID of the second user 212. The user ID of the second user 212 is performed to determine whether to assign an access right for the Bluetooth hardware 250 to the second user 212. Since a user ID of the second user 212 is "11" and a user ID of a main user is "0", the determination result indicates that the user ID of the second user 212 is different from the user ID of the main user.

In step 430, the connection manager 222 requests an access policy from the policy manager 224. In step 440, the connection manager 222 receives the access policy from the policy manager 224. In step 450, the connection manager 222 requests user information from the user manager 226. In step 460, the connection manager 22 receives the user information from the user manager 226.

In step 470, the connection manager 222 permits the second application and the second user 212 to access the Bluetooth hardware 250 based on the received access policy and user information. Accordingly, the connection manager 222 requests access to the Bluetooth hardware 250 for the second application from the Bluetooth driver 234.

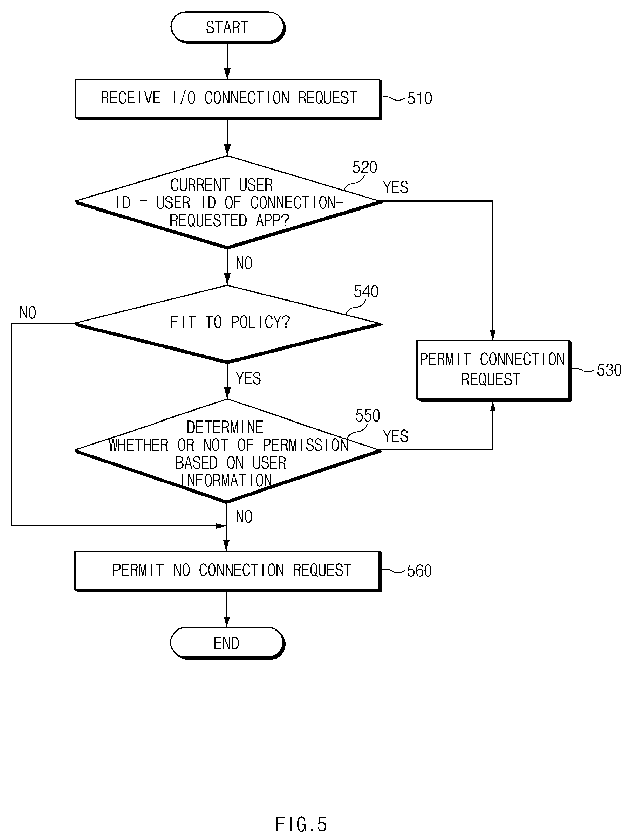

FIG. 5 is a flow chart illustrating a method for determining whether to assign an access right for any module of an electronic device to an application executed on the electronic device 200, according to an embodiment of the present disclosure.

In step 510, the connection manager 222 receives a request for connection to a module from a user or an application executed by the user.

In step 520, the connection manager 222 determines whether a user ID of the user is a user ID of a current user. If the user ID of the user is the user ID of the current user, the connection manager 222 permits access to the module, in step 530.

If the user ID of the user is not the user ID of the current user, the connection manager 222 determines whether the user or the executed application is a fit for the access policy, in step 540. If the user or the executed application is not a fit for the access policy, the connection manager 222 does not permit access to the module, in step 560.

If the user or the executed application is a fit for the access policy, the connection manager 222 determines whether user information of the user is a fit for permitting access to the module. If the user information of the user is a fit for permitting access to the module, the connection manager 222 permits access to the module, in step 530. For example, the connection manager 222 may permit access to the module if a specific relationship (e.g., a parent-child relationship or a special use (e.g., a user affiliated with a current user)) exists between the current user and a user executing the application requesting access, or if an application requesting access has a security level that exceeds a given level.

If the user or the executed application is not a fit for the access policy, the connection manager 222 does not permit an access to the module, in step 560.

According to various embodiments of the present disclosure, at least a part of step 510 to step 560 may be performed simultaneously, or a sequence thereof may be changed. For example, step 520, step 540, and step 550 may be performed simultaneously, and a sequence of step 540 and step 550 may be changed. Furthermore, some of steps 510 to 560 may be performed.

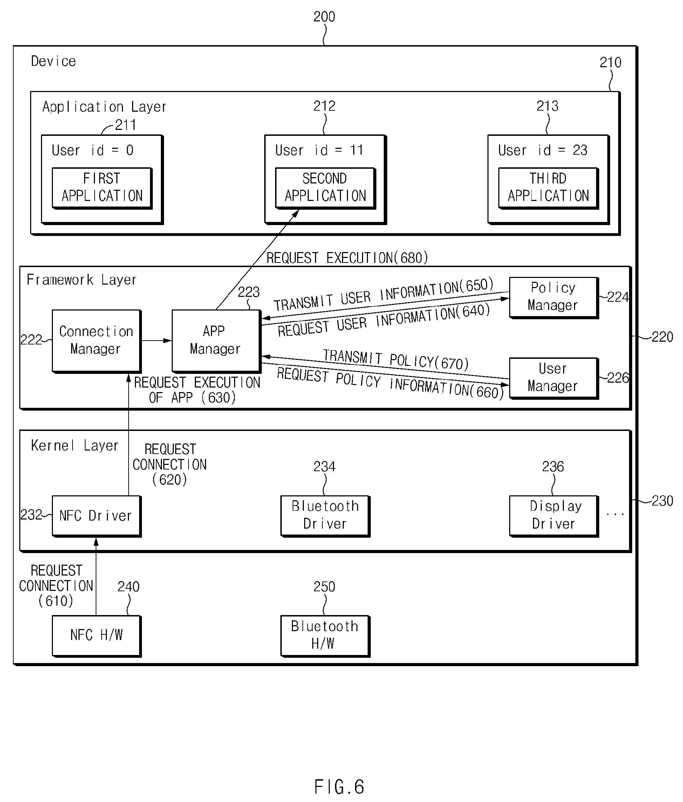

FIG. 6 is a flow chart illustrating a method for executing an application in response to an access request to the application received from an electronic device, according to an embodiment of the present disclosure.

The NFC hardware 240 receives an external connection request for a second application. For example, the connection request may include information about the second application. The NFC hardware 240 transfers the received connection request to the NFC driver 232, in step 610.

In step 620, the NFC driver 232 transfers the connection request to the connection manager 222.

In step 630, the connection manager 222 requests execution of the second application from the application manager. To find an execution-requested application, a conventional electronic device may search for the requested application from only applications installed for a current user. Accordingly, when an access-requested application is installed for a user different from the current user, the conventional electronic device may not find the requested application, and thus, the conventional electronic device may not perform a functional operation corresponding to the requested application. According to various embodiments of the present disclosure, however, whether to permit access may be determined by verifying whether to permit access to an application installed for a user different from the current user.

In step 640, the application manager 223 requests an access policy from the policy manager 224. In step 650, the application manager receives the access policy from the policy manager 224. In step 660, the application manager 223 requests user information from the user manager 226. In step 670, the application manager 223 receives user information from the user manager 226.

In step 680, the application manager 223 executes the second application based on the received access policy and user information.

Operations performed to execute the second application at the application manager 223 may correspond to operations of the connection manager 222 described above with reference to FIGS. 1 to 5. According to various embodiments of the present disclosure, an operation performed at the application manager 223 may be able to be performed at the connection manager 222.

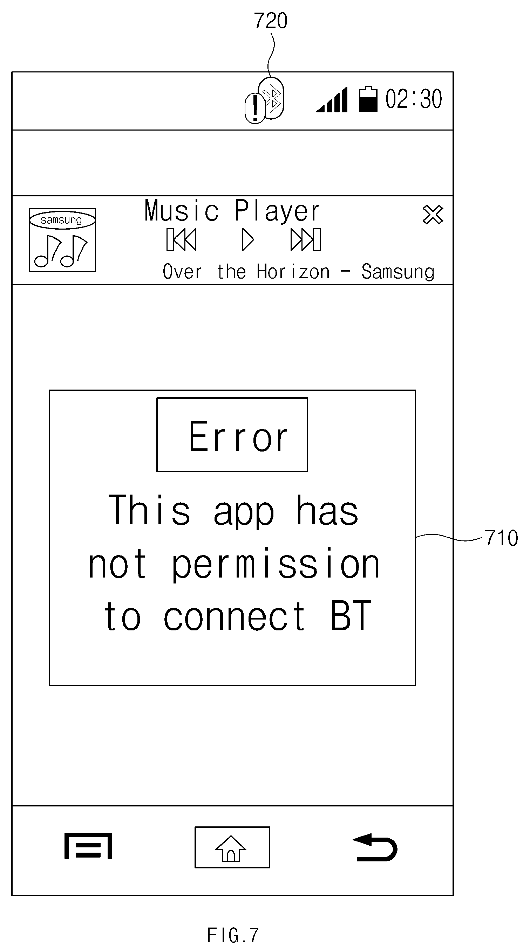

FIG. 7 is a diagram illustrating the notification of an application executed on the electronic device that access to a module included in the electronic device is not permitted, according to an embodiment of the present disclosure.

For example, when a user of a music application requesting access to Bluetooth is not a current user set on the OS, the connection manager 222 determines whether to permit the music application to access the Bluetooth, based on an access policy and user information.

When the determination result indicates that the music application is not permitted to access the Bluetooth, the electronic device 200 may display, on the screen, an error message 710, which provides a notification that the music application does not have an access right, and an indicator 720. According to various embodiments of the present disclosure, when the executed music application does not have an access right for the Bluetooth, the electronic device 200 may output an alarm sound and a vibration to inform the user that the music application does not have the access right.

If the executed music application has an access right for the Bluetooth, access to the Bluetooth may be permitted. In this case, the electronic device 200 may provide a notification (e.g., an acknowledgment message and an indicator) informing the user that access is permitted.

According to various embodiments of the present disclosure, an electronic device may include a display, a processor electrically connected to the display, at least one hardware component electrically connected to the processor, and a memory electrically connected to the processor and configured to store an operating system (OS), at least one software module, a first application program, a second application program, a third application program, and instructions. Upon execution of the instructions, the processor is configured to execute the OS in a first state in which the first application program is capable of using at least one of the hardware component and the software module, to permit the second application program to use the at least one of the hardware component and the software module in the first state in response to a first input requesting execution of a function of the second application program, which is set to be executed in a second state of the OS, the second state being different from the first state, and to prevent the third application program from using the at least one of the hardware component and the software module in the first state in response to a second input requesting execution of a function of the third application program, which is set to be executed in a third state, the third state being different from both the first state and the second state.

According to various embodiments of the present disclosure, the processor is further configured to display a first icon for the first application program, a second icon for the second application program, and a third icon for the third application program on a single screen of the display or on at least two scroll-capable screens of the display.

According to various embodiments of the present disclosure, the processor is further configured to display a first icon for the first application program on a first screen of the display, and to display a second icon for the second application program on a second screen of the display, the second screen being different from the first screen.

According to various embodiments of the present disclosure, the processor is further configured to display a third icon that calls the second screen together with the first icon for the first application program on a single screen of the display or on at least two scroll-capable screens of the display.

According to various embodiments of the present disclosure, a first identification indicator corresponding to the first state, a second identification indictor corresponding to the second state, and a third identification indicator corresponding to the third state are respectively assigned to the first application program, the second application program, and the third application program, the first identification indicator, the second identification indicator, and the third identification indicator.

According to various embodiments of the present disclosure, each of the first identification indicator, the second identification indicator, and the third identification indicator corresponds to a user identifier (ID) set on the OS.

According to various embodiments of the present disclosure, in the first state of the OS, an application program to which the first identification indicator is assigned uses the at least one of the hardware component and the software module.

According to various embodiments of the present disclosure, the processor is further configured to permit the second application program to use the at least one of the hardware component and the software module, based on whether an application program to which an identification indicator that is different from the first identification indicator is assigned uses the at least one of the hardware component and the software module.

According to various embodiments of the present disclosure, the processor is further configured to permit the second application program to use the at least one of the hardware component and the software module based on whether an application program to which the second identification indicator is assigned uses the at least one of the hardware component and the software module.

According to various embodiments of the present disclosure, a method performed on an electronic device may include executing an operating system (OS) in a first state in which a first application program is capable of using at least one hardware component and/or at least one software module, permitting a second application program to use the at least one of the hardware component and the software module in the first state in response to a first input requesting execution of a function of the second application program, which is set to be executed in a second state of the OS, the second state being different from the first state, and preventing a third application program from using the at least one of the hardware component and the software module in the first state in response to a second input requesting execution of a function of the third application program, which is set to be executed in a third state of the OS, the third state being different from the both the first state and the second state.

According to various embodiments of the present disclosure, the method may further include displaying a first icon for the first application program, a second icon for the second application program, and a third icon for the third application program on a single screen of a display of the electronic device or on at least two scroll-capable screens of the display.

According to various embodiments of the present disclosure, the method may further include displaying a first icon for the first application program on a first screen of a display of the electronic device, and displaying a second icon for the second application program on a second screen of the display, the second screen being different from the first screen.

According to various embodiments of the present disclosure, the second icon for the second application program is displayed in response to a user input selecting a third icon that calls the second screen.

According to various embodiments of the present disclosure, the third icon is displayed on a single screen or on at least two scroll-capable screens together with the first icon for the first application program.

According to various embodiments of the present disclosure, a first identification indicator corresponding to the first state, a second identification indicator corresponding to the second state, and a third identification indicator corresponding to the third state are respectively assigned to the first application program, the second application program, and the third application program, and each of the first identification indicator, the second identification indicator, and the third identification indicator are different from each other.

According to various embodiments of the present disclosure, each of the first identification indicator, the second identification indicator, and the third identification indicator corresponds to a user identifier (ID) set on the OS.

According to various embodiments of the present disclosure, in the first state of the OS, an application program to which the first identification indicator is assigned uses the at least one of the hardware component and the software module.

According to various embodiments of the present disclosure, the second application program is permitted to use the at least one of the hardware component and the software module in the first state based on whether an application program to which an identification indicator that is different from the first identification indicator is assigned uses the at least one of the hardware component and the software module, and whether an application program to which the second identification indicator is assigned uses the at least one of the hardware component and the software module.

According to various embodiments of the present disclosure, it is determined whether the application program to which the second identification indicator is assigned uses the at least one of the hardware component and the software module based on relationship information between a first user using the first application program to which the first identification indicator is assigned and a second user using the second application program to which the second identification indicator is assigned.

According to various embodiments of the present disclosure, a computer recording medium recorded with a computer-readable instruction may be provided. The instruction, which is executed by at least one processor, may cause the processor to perform a method including executing an operating system (OS) in a first state in which a first application program is capable of using at least one hardware component and/or at least one software module, permitting a second application program to use the at least one of the hardware component and the software module in the first state in response to a first input requesting execution of a function of the second application program, which is set to be executed in a second state of the OS, the second state being different from the first state, and preventing a third application program from using the at least one of the hardware component and the software module in the first state in response to a second input requesting execution of a function of the third application program, which is set to be executed in a third state of the OS, the third state being different from the both the first state and the second state.

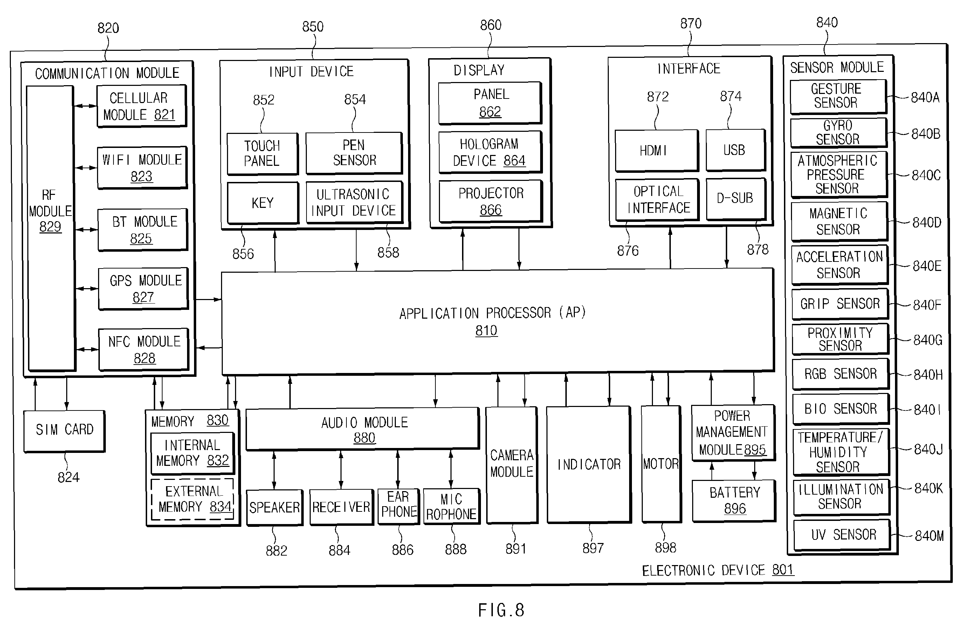

FIG. 8 is a block diagram illustrating an electronic device, according to an embodiment of the present disclosure. An electronic device 801 may include, for example, all or a part of the electronic device 101 of FIG. 1. The electronic device 801 includes one or more processors (e.g., an application processor) 810, a communication module 820, a subscriber identification module (SIM) card 824, a memory 830, a sensor module 840, an input device 850, a display 860, an interface 870, an audio module 880, a camera module 891, a power management module 895, a battery 896, an indicator 897, and a motor 898.

The processor 810 may drive an OS or an application to control a plurality of hardware or software components connected to the processor 810 and may process and compute a variety of data. The processor 810 may be implemented with a system on chip (SoC), for example. The processor 810 may further include a graphic processing unit (GPU) and/or an image signal processor. The processor 810 may include at least a part (e.g., a cellular module 821) of components illustrated in FIG. 8. The processor 810 may load and process an instruction or data, which is received from at least one of the other components (e.g., a nonvolatile memory), and may store a variety of data at a nonvolatile memory.

The communication module 820 may be configured the same as or similar to the communication interface 170 of FIG. 1. The communication module 820 includes a cellular module 821, a Wi-Fi module 823, a Bluetooth (BT) module 825, a GNSS module 827 (e.g., a GPS module, Beidou module, or a Galibeo module), a near field communication (NFC) module 828, and a radio frequency (RF) module 829.

The cellular module 821 may provide voice communication, video communication, a character service, an Internet service, or the like, through a communication network. According to an embodiment, the cellular module 821 may perform discrimination and authentication of the electronic device 801 within a communication network using the SIM card 824, for example. The cellular module 821 may perform at least a portion of the functions that the processor 810 provides. According to an embodiment, the cellular module 821 may include a communication processor (CP).

Each of the Wi-Fi module 823, the BT module 825, the GNSS module 827, and the NFC module 828 may include a processor for processing data exchanged through a corresponding module, for example. According to an embodiment, at least a portion (e.g., two or more components) of the cellular module 821, the Wi-Fi module 823, the BT module 825, the GNSS module 827, and the NFC module 828 may be included within one integrated circuit (IC) or an IC package.

The RF module 829 may transmit and receive data, for example, a communication signal (e.g., an RF signal). The RF module 829 may include a transceiver, a power amplifier module (PAM), a frequency filter, a low noise amplifier (LNA), an antenna, or the like. According to various embodiments, at least one of the cellular module 821, the Wi-Fi module 823, the BT module 825, the GNSS module 827, and the NFC module 828 may transmit and receive an RF signal through a separate RF module.

The subscriber identification module 824 may include, for example, a card and/or an embedded SIM and may include unique identify information (e.g., integrated circuit card identifier (ICCID)) or subscriber information (e.g., integrated mobile subscriber identity (IMSI)).

The memory 830 (e.g., the memory 130) includes at least one of an internal memory 832 or an external memory 834. For example, the internal memory 832 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 834 may include a flash drive, for example, compact flash (CF), secure digital (SD), micro secure digital (Micro-SD), mini secure digital (Mini-SD), extreme digital (xD), multimedia card (MMC), a memory stick, or the like. The external memory 834 may be functionally and/or physically connected to the electronic device 801 through various interfaces.

According to various embodiments of the present disclosure, the memory 830 may store various components described with reference to FIGS. 1 to 7. For example, the memory 830 may store various user environments of the application layer 210 and applications of each user environment. Furthermore, the memory 830 may store various managers of the framework layer 220, various drivers of the kernel layer 230, and the like. In addition, the memory 830 may store an instruction about an operation flow of the components.

The sensor module 840 may measure, for example, a physical quantity or may detect an operation state of the electronic device 801. The sensor module 940 may convert the measured or detected information to an electric signal. The sensor module 840 includes at least one of a gesture sensor 840A, a gyro sensor 840B, a barometric pressure sensor 840C, a magnetic sensor 840D, an acceleration sensor 840E, a grip sensor 840F, a proximity sensor 840G, a color sensor 840H (e.g., red, green, blue (RGB) sensor), a biometric sensor 840I, a temperature/humidity sensor 840J, an illuminance sensor 840K, and a UV sensor 840M. Additionally or alternatively, the sensor module 840 may further include, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, and/or a fingerprint sensor. The sensor module 840 may further include a control circuit for controlling at least one or more sensors included therein. According to an embodiment, the electronic device 801 may further include a processor that is a part of the processor 810 or independent of the processor 810 and is configured to control the sensor module 840. The processor may control the sensor module 840 while the processor 810 remains at a sleep state.

The input device 850 includes at least one of a touch panel 852, a (digital) pen sensor 854, a key 856, or an ultrasonic input unit 858. The touch panel 852 may use at least one of capacitive, resistive, infrared, and ultrasonic detecting methods. Also, the touch panel 852 may further include a control circuit. The touch panel 852 may further include a tactile layer to provide a tactile reaction to a user.

The (digital) pen sensor 854 may be, for example, a part of a touch panel or may include an additional sheet for recognition. The key 856 may include, for example, a physical button, an optical key, a keypad, and the like. The ultrasonic input device 858 may detect (or sense) an ultrasonic signal, which is generated from an input device, through a microphone 888 and may check data corresponding to the detected ultrasonic signal.

The display 860 (e.g., the display 160) includes at least one of a panel 862, a hologram device 864, or a projector 866. The panel 862 may be configured to be the same as or similar to the display 160 illustrated in FIG 1. The panel 862 may be implemented to be flexible, transparent, or wearable, for example. The panel 862 and the touch panel 852 may be integrated into a single module. The hologram device 864 may display a stereoscopic image in a space using a light interference phenomenon. The projector 866 may project light onto a screen so as to display an image. The screen may be arranged in the inside or the outside of the electronic device 801. The display module 860 may further include a control circuit for controlling the panel 862, the hologram device 864, or the projector 866.

The interface 870 includes at least one of an HDMI 872, a USB 874, an optical interface 876, and a D-subminiature (D-sub) 878. The interface 870 may be included, for example, in the communication interface 170 illustrated in FIG. 1. Additionally or alternatively, the interface 870 may include, for example, a mobile high definition link (MHL) interface, a SD card/multi-media card (MMC) interface, or an infrared data association (IrDA) standard interface.

The audio module 880 may convert a sound and an electric signal in dual directions. At least a portion of the audio module 880 may be included, for example, in the input/output interface 150 illustrated in FIG. 1. The audio module 880 may process, for example, sound information that is inputted or outputted through a speaker 882, a receiver 884, an earphone 886, or the microphone 888.

The camera module 891 for shooting a still image or a video may include, for example, at least one image sensor (e.g., a front sensor or a rear sensor), a lens, an image signal processor (ISP), or a flash (e.g., an LED or a xenon lamp)

The power management module 895 may manage, for example, power of the electronic device 801. According to an embodiment, a power management integrated circuit (PMIC) a charger IC, or a battery gauge may be included in the power management module 895. The PMIC may have a wired charging method and/or a wireless charging method. The wireless charging method may include, for example, a magnetic resonance method, a magnetic induction method, or an electromagnetic method, and may further include an additional circuit, such as, for example, a coil loop, a resonant circuit, or a rectifier. The battery gauge may measure, for example, a remaining capacity of the battery 896 and a voltage, current, or temperature thereof while the battery is charged. The battery 896 may include, for example, a rechargeable battery and/or a solar battery.

The indicator 897 may display a specific state of the electronic device 801 or a portion thereof (e.g., the processor 810), such as, for example, a booting state, a message state, a charging state, and the like. The motor 898 may convert an electrical signal into a mechanical vibration and may generate vibration and/or haptic effects. A processing device (e.g., a GPU) for supporting a mobile TV may be included in the electronic device 801. The processing device for supporting a mobile TV may process media data according to the standards of digital multimedia broadcasting (DMB), digital video broadcasting (DVB), or the like.

Each of the above-described elements of the electronic device, according to various embodiments of the present disclosure, may be configured with one or more components, and the names of the elements may be changed according to the type of the electronic device. The electronic device may include at least one of the above-described elements, and some elements may be omitted or other additional elements may be added. Furthermore, some of the elements of the electronic device may be combined with each other so as to form one entity, so that the functions of the elements may be performed in the same manner as before the combination.

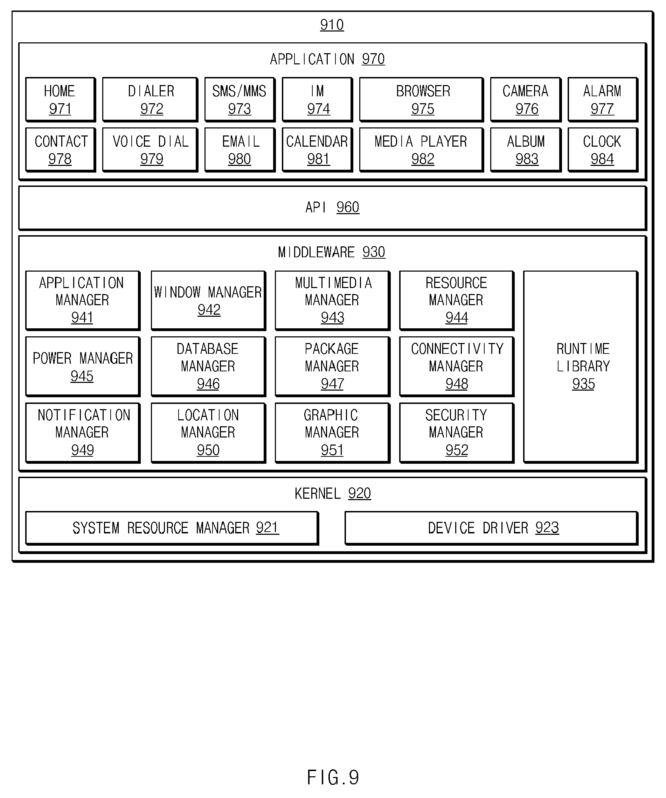

FIG. 9 is a block diagram illustrating a program module, according to an embodiment of the present disclosure. Referring to FIG, 9, a program module 910 (e.g., the program 140) may include an OS to control resources associated with an electronic device (e.g., the electronic device 101), and/or diverse applications (e.g., the application program 147) driven on the OS.

The program includes a kernel 920, a middleware 930, an API 960, and an application 970. At least a part of the program module 910 may be preloaded on an electronic device or may be able to be downloaded from an external electronic device (e.g., the first external electronic device 102, the second external electronic device 104, or the server device 106 of FIG. 1).

The kernel 920 (e.g., the kernel 141) includes, for example, a system resource manager 921 or a device driver 923. The system resource manager 921 may perform control, allocation, or retrieval of system resources. According to an embodiment, the system resource manager 921 may include a process managing part, a memory managing part, or a file system managing part. The device driver 923 may include, for example, a display driver, a camera driver, a Bluetooth driver, a common memory driver, an USB driver, a keypad driver, a Wi-Fi driver, an audio driver, or an inter-process communication (IPC) driver.

The middleware 930 may provide, for example, a function that the application 970 needs in common, or may provide diverse functions to the application 970 through the API 960 to allow the application 970 to efficiently use limited system resources of the electronic device. According to an embodiment of the present disclosure, the middleware 930 (e.g., a middleware 143) includes at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, or a security manager 952.

The runtime library 935 may include, for example, a library module that is used by a compiler to add a new function through a programming language while the application 970 is being executed. The runtime library 935 may perform input/output management, memory management, or capacities about arithmetic functions.

The application manager 941 may manage, for example, a life cycle of at least one application of the application 970. The window manager 942 may manage a GUI resource, which is used in a screen. The multimedia manager 943 may identify a format necessary for playing diverse media files, and may perform encoding or decoding of media files by using a codec suitable for the format. The resource manager 944 may manage resources, such as a storage space, memory, or source code of at least one application of the application 970.

The power manager 945 may operate, for example, with a basic input/output system (BIOS) to manage a battery or power, and may provide power information for an operation of an electronic device. The database manager 946 may generate, search for, or modify a database that is to be used in at least one application of the application 970. The package manager 947 may install or update an application that is distributed in the form of package file.

The connectivity manager 948 may manage, for example, a wireless connection, such as Wi-Fi or Bluetooth. The notification manager 949 may display or notify an event, such as an arrival message, a promise, or a proximity notification in a mode that does not disturb a user. The location manager 950 may manage location information of an electronic device. The graphic manager 951 may manage a graphic effect that is provided to a user, or may manage a user interface relevant thereto. The security manager 952 may provide a general security function necessary for system security or user authentication. According to an embodiment of the present disclosure, when an electronic device (e.g., the electronic device 101) includes a telephony function, the middleware 930 may further include a telephony manager for managing a voice or video call function of the electronic device.

The middleware 930 may include a middleware module that combines diverse functions of the above-described components. The middleware 930 may provide a module specific to each OS kind to provide differentiated functions. Additionally, the middleware 930 may remove a part of the preexisting components, dynamically, or may add a new component thereto.

The API 960 (e.g., an API 145) may be, for example, a set of programming functions and may be provided with a configuration that is variable depending on an OS. For example, it may be permissible to provide one API set per platform, or two or more API sets per platform.

The application 970 (e.g., the application program 147) includes, for example, one or more applications capable of providing functions for a home 971, a dialer 972, an SMS/MMS 973, an instant message (IM) 974, a browser 975, a camera 976, an alarm 977, a contact 978, a voice dial 979, an e-mail 980, a calendar 981, a media player 982, am album 983, and a timepiece 984, or for offering health care (e.g., measuring an exercise quantity or blood sugar level) or environment information (e.g., atmospheric pressure, humidity, or temperature).

According to an embodiment, the application 970 may include an application (hereinafter referred to as "information exchanging application") to support information exchange between the electronic device 101 and an external electronic device 102, or 104. The information exchanging application may include, for example, a notification relay application for transmitting specific information to the external electronic device, or a device management application for managing the external electronic device.

For example, the information exchanging application may include a function of transmitting notification information, which arises from other applications (e.g., applications for SMS/MMS, e-mail, health care, or environmental information), to an external electronic device 102, or 104 of FIG. 1. Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device, which communicates with the electronic device, an application running in the external electronic device, or a service (e.g., a call service, a message service, or the like) provided from the external electronic device.

According to an embodiment of the present disclosure, the application 970 may include an application (e.g., a health care application of a mobile medical device, and the like), which is assigned in accordance with an attribute of the external electronic device. The application 970 may include an application that is received from an external electronic device. The application 970 may include a preloaded application or a third party application that is able to be downloaded from a server. The component titles of the program module 910 may be modifiable depending on kinds of OSs.

According to various embodiments of the present disclosure, at least a portion of the program module 910 may be implemented by software, firmware, hardware, or a combination of two or more thereof. At least a portion of the program module 910 may be implemented (e.g., executed), for example, by a processor (e.g., the processor 120). At least a portion of the program module 910 may include, for example, modules, programs, routines, sets of instructions, processes, or the like for performing one or more functions.

The term "module", as used herein, may represent, for example, a unit including one or more combinations of hardware, software, and firmware. The term "module" may be interchangeably used with the terms "unit", "logic", "logical block", "component" and "circuit". A module may be a minimum unit of an integrated component or may be a part thereof. A module may be a minimum unit for performing one or more functions or a part thereof. A module may be implemented mechanically or electronically. For example, a module may include at least one of an application-specific IC (ASIC) chip, a field-programmable gate array (FPGA), and a programmable-logic device for performing some operations, which are known or will be developed.

At least a portion of an apparatus (e.g., modules or functions thereof) or a method (e.g., operations), according to various embodiments of the present disclosure, may be, for example, implemented by instructions stored in a computer-readable storage medium in the form of a program module. The instruction, when executed by one or more processors (e.g., the processor 120), may cause the one or more processors to perform a function corresponding to the instruction. The computer-readable storage medium may be the memory 130.

A computer-readable recording medium may include a hard disk, a magnetic media, a floppy disk, a magnetic media (e.g., a magnetic tape), an optical media (e.g., a compact disc read only memory (CD-ROM) and a digital versatile disc (DVD), a magneto-optical media (e.g., a floptical disk), and hardware devices (e.g., a read only memory (ROM), a random access memory (RAM), or a flash memory). Also, a program instruction may include, not only a mechanical code, such as things generated by a compiler, but also a high-level language code executable on a computer using an interpreter. The above hardware unit may be configured to operate via one or more software modules for performing an operation of the present disclosure, and vice versa.

A module or a program module, according to various embodiments of the present disclosure, may include at least one of the above elements, or a portion of the above elements may be omitted, or additional elements may be included. Operations performed by a module, a program module, or other elements, according to various embodiments of the present disclosure, may be executed sequentially, in parallel, repeatedly, or in a heuristic method. Also, a portion of operations may be executed in different sequences, omitted, or other operations may be added.

While the disclosure has been shown and described with reference to certain embodiments thereof, it will be understood by those skilled in the art that various changes in form and detail may be made therein without departing from the spirit and scope of the present disclosure as defined by the appended claims and their equivalents.

## Claims

1. An electronic device, comprising:
a display;
a processor electrically connected to the display;
a hardware component electrically connected to the processor; and
a memory electrically connected to the processor and configured to store an operating system (OS), a software module, a first application program, a second application program, a third application program, and instructions,
wherein upon execution of the instructions, the processor is configured to:
execute the OS in a first state in which the first application program is capable of using at least one of the hardware component and the software module,
permit the second application program to use the at least one of the hardware component and the software module in the first state in response to a first input requesting execution of a function of the second application program, which is set to be executed in a second state of the OS, the second state being different from the first state, and
prevent the third application program from using the at least one of the hardware component and the software module in the first state in response to a second input requesting execution of a function of the third application program, which is set to be executed in a third state, the third state being different from both the first state and the second state.

2. The electronic device of claim 1, wherein the processor is further configured to display a first icon for the first application program, a second icon for the second application program, and a third icon for the third application program on a single screen of the display or on at least two scroll-capable screens of the display.

3. The electronic device of claim 1, wherein the processor is further configured to display a first icon for the first application program on a first screen of the display, and to display a second icon for the second application program on a second screen of the display, the second screen being different from the first screen.

4. The electronic device of claim 3, wherein the processor is further configured to display a third icon that calls the second screen together with the first icon for the first application program on a single screen of the display or on at least two scroll-capable screens of the display.

5. The electronic device of claim 1, wherein a first identification indicator corresponding to the first state, a second identification indictor corresponding to the second state, and a third identification indicator corresponding to the third state are respectively assigned to the first application program, the second application program, and the third application program, the first identification indicator, the second identification indicator, and the third identification indicator.

6. The electronic device of claim 5, wherein each of the first identification indicator, the second identification indicator, and the third identification indicator corresponds to a user identifier (ID) set on the OS.

7. The electronic device of claim 5, wherein, in the first state of the OS, an application program to which the first identification indicator is assigned uses the at least one of the hardware component and the software module.

8. The electronic device of claim 7, wherein the processor is further configured to permit the second application program to use the at least one of the hardware component and the software module, based on whether an application program to which an identification indicator that is different from the first identification indicator is assigned uses the at least one of the hardware component and the software module.

9. The electronic device of claim 7, wherein the processor is further configured to permit the second application program to use the at least one of the hardware component and the software module based on whether an application program to which the second identification indicator is assigned uses the at least one of the hardware component and the software module.

10. A method performed on an electronic device, the method comprising:
executing an operating system (OS) in a first state in which a first application program is capable of using at least one of a hardware component and a software module;
permitting a second application program to use the at least one of the hardware component and the software module in the first state in response to a first input requesting execution of a function of the second application program, which is set to be executed in a second state of the OS, the second state being different from the first state; and
preventing a third application program from using the at least one of the hardware component and the software module in the first state in response to a second input requesting execution of a function of the third application program, which is set to be executed in a third state of the OS, the third state being different from the both the first state and the second state.

11. The method of claim 10, further comprising:
displaying a first icon for the first application program, a second icon for the second application program, and a third icon for the third application program on a single screen of a display of the electronic device or on at least two scroll-capable screens of the display.

12. The method of claim 10, further comprising:
displaying a first icon for the first application program on a first screen of a display of the electronic device; and
displaying a second icon for the second application program on a second screen of the display, the second screen being different from the first screen.

13. The method of claim 12, wherein the second icon for the second application program is displayed in response to a user input selecting a third icon that calls the second screen.

14. The method of claim 13, wherein the third icon is displayed on a single screen or on at least two scroll-capable screens together with the first icon for the first application program.

15. The method of claim 10, wherein a first identification indicator corresponding to the first state, a second identification indicator corresponding to the second state, and a third identification indicator corresponding to the third state are respectively assigned to the first application program, the second application program, and the third application program, and each of the first identification indicator, the second identification indicator, and the third identification indicator are different from each other.
